# FASCICULE DE BREVET EUROPEEN

(11) **EP 0 904 697 B1**
(45) Date de publication et mention de la délivrance du brevet: **02.05.2003**
(21) Numéro de dépôt: 98117707.4
(22) Date de dépôt: 18.09.1998
(51) Int. Cl.: A22C 11/02

(54) **Dispositif séparateur à machine de bourrage de saucisses**
Portioniervorrichtung an Wurstfüllmaschine
Portioning device on sausage stuffing machine

(30) Priorité: 25.09.1997 IT VI970162
(43) Date de publication de la demande: 31.03.1999
(73) Titulaire: TORNERIA MECCANICA di Carollo & C.s.n.c., 36010 Zane' (Vicenza) (IT)
(72) Inventeur: Carollo, Beniamino, 36010 Zané (Vicenza) (IT)
(74) Mandataire: Bettello, Pietro, Dott. Ing.

(56) Documents cités:
- WO-A-83/00985
- FR-A- 2 227 180
- GB-A- 2 000 425
- US-A- 3 659 317
- US-A- 3 860 996
- US-A- 4 044 426
- US-A- 4 419 790
- US-A- 4 599 764

## Description

La présente invention concerne un dispositif séparateur conforme au préambule de la revendication 1.

Dans le domaine du conditionnement industriel, il est fréquent d'utiliser des conteneurs réalisés avec des enveloppes en matière flexible, de forme sensiblement tubulaire, qui, une fois remplies par une opération de mise en saucisses, sont fermées aux deux extrémités par une opération de ligature ou de pose de pinces.

L'opération de mise en saucisses se rencontre, en particulier, dans le conditionnement de produits alimentaires et, surtout, dans le conditionnement de produits hachés à base de viande pour obtenir ce qu'on appelle les « saucisses » où l'enveloppe est constituée par un boyau qu'on remplit avec de la pâte de viande hachée pour obtenir des saucissons, des saucisses et analogues.

Dans l'état actuel de la technique, l'opération de mise en saucisses de la viande hachée se réalise sensiblement avec des conditionneuses où l'opérateur enfile dans le conduit d'alimentation du produit à mettre en saucisses l'extrémité ouverte du boyau conteneur, l'extrémité opposée de ce dernier étant préalablement fermée au moyen d'un noeud de ficelle ou au moyen d'un resserrement par pince.

Après que la quantité préétablie de produit a été déposée à l'intérieur du boyau, l'opérateur procède à la fermeture manuelle de l'extrémité, en réalisant ainsi le produit mis en saucisses.

Un inconvénient qui se présente, aussi bien lorsque la mise en saucisses se produit manuellement comme décrit précédemment, qu'en employant des machines automatiques, est celui constitué par une fermeture imparfaite du conteneur à la fin de l'opération d'introduction du produit dans le boyau, c'est-à-dire d'une pose de pinces irrégulière.

En effet, le produit à mettre en saucisses contient toujours intérieurement des particules filiformes, constituées dans le cas de la pâte de viande, par des cartilages, de petits morceaux de tissu nerveux et analogues, ce qu'on appelle les « effilochures ».

Pendant l'opération de fermeture du conteneur par pose de pinces, c'est-à-dire lorsqu'on effectue le resserrement de la partie terminale du boyau, de tels produits filiformes peuvent rester piégés dans la zone de pose de pinces et avoir donc pour résultat des parties qui dépassent de la saucisse, en ne permettant donc pas d'obtenir une fermeture régulière et complète de la bande métallique et ceci détermine l'éventuelle rupture du boyau dans ladite zone de pose de pinces.

Dans le document US-A-4044426 est décrit un dispositif distributeur, à interposer entre la machine doseuse ou l'appareil de division en portions du produit à mettre en saucisses et la machine de pose de pinces, qui est en mesure de séparer de façon nette et selon un plan perpendiculaire à la direction d'avancement du produit, la portion de ce produit qui est déjà mise en saucisses de celle qui est encore à mettre en saucisses.

En particulier on prévoit un conduit, de forme tubulaire, sur lequel on enfile extérieurement l'enveloppe ou boyau à remplir, qui est muni, à proximité de ou exactement à son extrémité placée immédiatement en amont des pinces qui réalisent la fermeture par pinces, d'une pluralité de lames coupantes ou de couteaux, au moins au nombre de deux, d'allure radiale ou diamétrale, mutuellement adjacentes dont au moins une est susceptible de tourner autour de l'axe du conduit distributeur.

En fonctionnement, le produit à mettre en saucisses, transporté par le conduit tubulaire, va se déposer dans le conteneur ou boyau qui, graduellement, se dégage dudit conduit sous l'effet de son remplissage.

Lorsqu'on a mis en saucisses une quantité préétablie de produit, la machine doseuse ou l'appareil de division en portions s'arrête et, au moyen du dispositif selon l'invention, on procède à la rotation de 180° ou de 360° d'un des deux couteaux mutuellement adjacents, de préférence de celui qui est placé le plus à l'intérieur par rapport à l'extrémité du conduit distributeur, en obtenant, grâce à l'action de coupe exercée par les arêtes tranchantes des couteaux mobiles contre les'arêtes tranchantes des couteaux fixes, une séparation nette entre la portion de produit mis en saucisses contenue dans le boyau et la partie restante qui est restée contenue dans le conduit distributeur d'alimentation précite.

Avec ce mode d'exécution de la séparation de la portion de produit mis en saucisses par rapport à la masse restante, outre le fait qu'on fragmente les éventuels résidus filiformes pour obtenir une surface de séparation parfaite, on facilite l'opération suivante de pose de pinces, puisque le produit ne peut pas retourner en arrière pendant le resserrement du boyau et la fermeture du boyau par pince, en assurant, de cette façon, l'exactitude du poids du produit mis en saucisses.

Le but de la présente invention est de réaliser un tel dispositif qui soit plus simple et confiable en respect du dispositif décrit dans le document cité. Cela est obtenu avec un dispositif selon la partie caractérisante de la revendication 1.

Les caractéristiques de l'invention, apparaissent à la lecture de la description d'une forme possible de réalisation, donnée à seul titre d'exemple illustratif et non limitatif, à l'aide des planches de dessin annexées sur lesquelles :
La Fig. 1 (planche I) représente une vue en coupe en élévation du dispositif selon l'invention ;
la Fig. 2 représente une vue éclatée de l'extrémité du dispositif selon l'invention ;

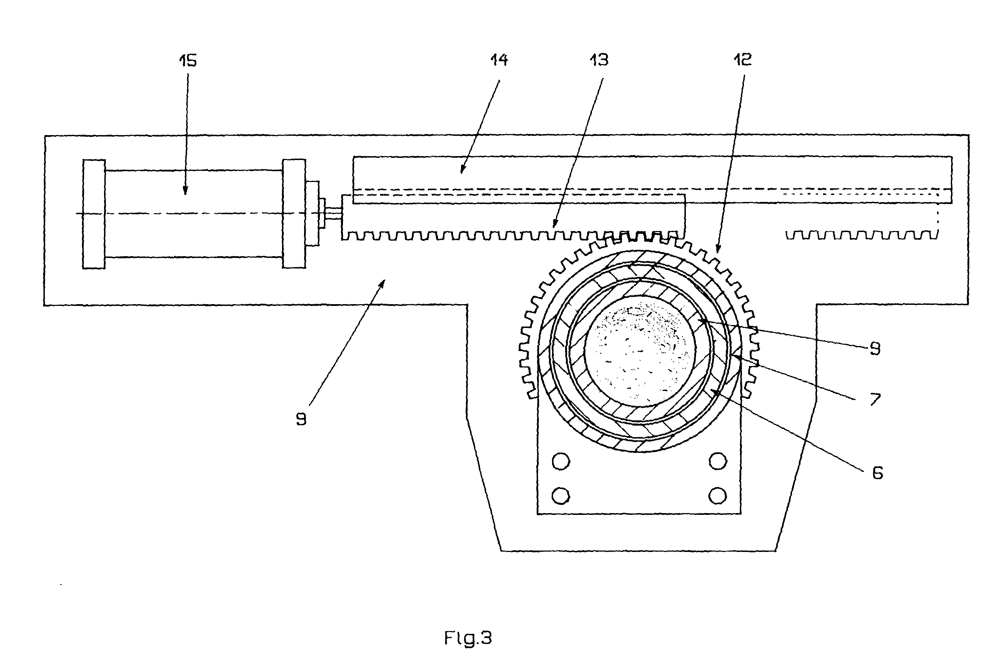

la Fig. 3 (planche II) représente une vue de côté du dispositif selon l'invention, coupée selon la ligne III-III de la Fig. 1 ;
la Fig. 4 (planche III) représente la phase de mise en saucisses, avec les couteaux alignés l'un par rapport à l'autre pour faciliter le passage du produit à mettre en saucisses ;
la Fig. 5 représente la phase de pose de pinces et après que les couteaux ont tourné l'un par rapport à l'autre pour réaliser la séparation du produit ;
la Fig. 6 représente une vue transversale en coupe selon la ligne VI-VI de la Fig. 4 ;
la Fig. 7 représente une vue transversale en coupe selon la ligne VII-VII de la Fig. 5.

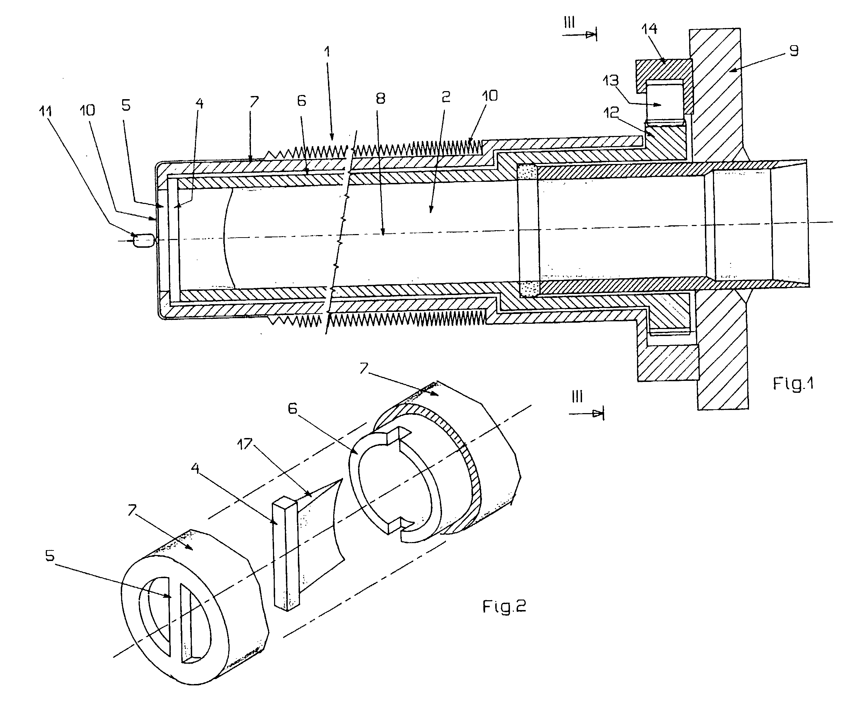

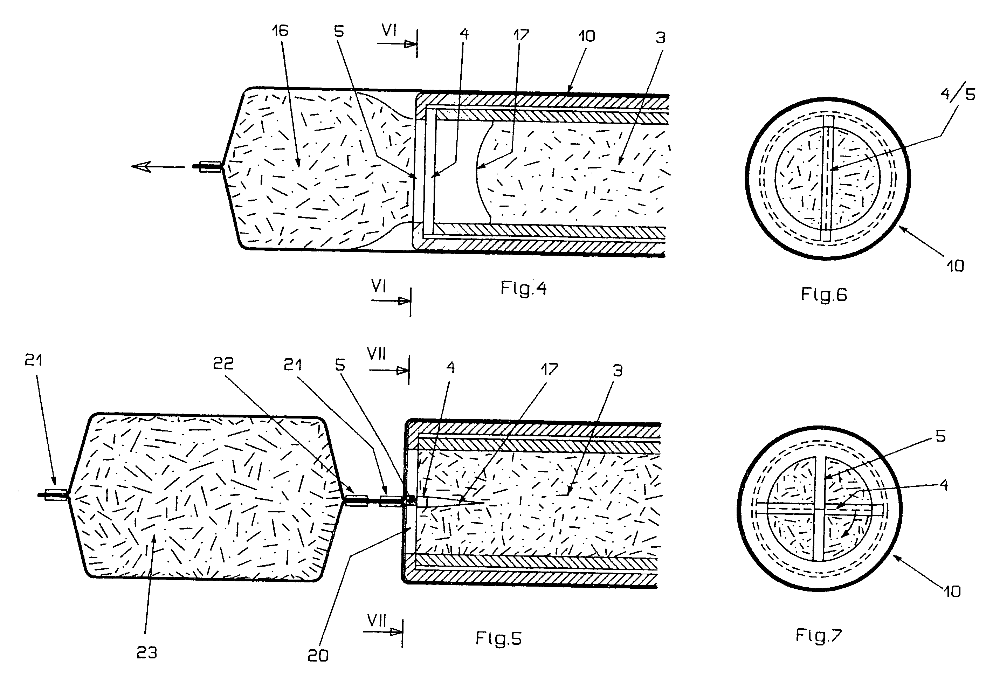

Comme on peut le voir sur la Fig. 1, le dispositif séparateur selon l'invention comprend un organe, ou structure, essentiellement tubulaire 1 qui présente à l'extrémité de son conduit intérieur d'alimentation 2 du produit à mettre en saucisses 3, deux lames coupantes 4 et 5 disposées de façon diamétrale sur ledit conduit, mutuellement indépendantes et adjacentes. La lame coupante 4 est dite amont, dans la mesure où elle est disposée, par rapport à la machine de fermeture du produit, de façon plus éloignée que la lame 5, qui est dite aval. La machine de fermeture est représentée sur les figures 4 et 5.

Au moins une des deux lames coupantes est susceptible de tourner autour de l'axe longitudinal du conduit 2 sur au moins 180°.

Constructivement, ceci se réalise en prévoyant que le conduit d'alimentation 2 se trouve constitué par deux éléments tubulaires 6 et 7 coaxiaux et enfilés l'un dans l'autre.

En détail, les deux lames coupantes 4 et 5 sont ancrées aux extrémités des éléments tubulaires respectifs 6 et 7 et bloquées de façon amovible pour pouvoir être remplacées en conséquence de l'usure ou en fonction des différentes caractéristiques du produit à mettre en saucisses.

En outre, l'élément tubulaire 6, placé intérieurement, est rendu capable de tourner autour de l'axe 8 du conduit 2, tandis que l'élément tubulaire 7, placé extérieurement, est fixe, étant bloqué sur la plaque 9 de fixation à la machine doseuse ou à l'appareil de division en portions, non représentés, du produit à mettre en saucisses.

L'enveloppe conteneur 10, généralement constituée par un boyau, est enfilée en soufflet sur l'élément tubulaire extérieur 7 et fermée à l'extrémité par la pince 11.

Une solution constructive possible pour faire tourner l'élément tubulaire 6 se réalise au moyen d'une transmission à pignon-crémaillère.

Spécifiquement, l'élément tubulaire 6 intérieur est muni d'un pignon denté 12 qui engrène avec une crémaillère 13.

Le déplacement longitudinal alternatif de la crémaillère 13, mobile dans le guide 14 et mise en mouvement par le cylindre pneumatique 15, provoque, par l'intermédiaire du pignon 12, la rotation de l'élément tubulaire 6 intérieur et donc la rotation de la lame coupante 4 la plus intérieure.

En fonctionnement, comme on peut le voir sur les Fig. 4 et 5, le produit 3 à mettre en saucisses, provenant d'une machine doseuse non représentée, va remplir graduellement le conteneur ou boyau 10 lequel, en se dégageant automatiquement parce que poussé par le produit précité qui sort du conduit d'alimentation, commence à former la portion de saucisse 16.

Pendant cette phase de remplissage du boyau, les deux lames coupantes 4 et 5 sont arrêtées, parfaitement alignées et superposées de façon à réduire à un minimum l'encombrement à l'intérieur de la section du passage du conduit d'alimentation.

Avantageusement, la lame coupante 4 la plus intérieure est munie d'une saillie postérieure 17 munie d'une extrémité arrondie ou en coin, dont l'arête tranchante n'est pas nécessairement linéaire et qui, en divisant le produit à mettre en saucisses, facilite l'avancement de ce dernier.

Lorsque la machine doseuse ou l'appareil de division en portions a déchargé la quantité voulue de produit, on met en rotation la lame coupante 4 intérieure qui sépare de façon nette et complète la portion 18 du produit placée à l'intérieur du boyau de la partie restante du produit 19 qui reste dans le conduit d'alimentation 2

Grâce au glissement des deux lames 4 et 5 l'une sur l'autre, il se forme une surface de séparation nette 20, laquelle facilite l'action ultérieure de fermeture du conteneur ou la pose de pinces qui se réalise au moyen de machines de fermeture du produit connues en soi, lesquelles procèdent à la pose simultanée de deux pinces 21 et 22.

A la fin de l'opération de pose de pinces, on sépare les deux pinces 21 et 22 en obtenant ainsi le produit mis en saucisses final 23.

De ce qui a été décrit plus haut ressortent clairement les avantages du dispositif selon l'invention qui permettent d'exécuter l'opération de mise en saucisses de façon complètement automatique, en laissant à l'opérateur la seule fonction d'enfiler sur l'élément tubulaire extérieur 7 le conteneur ou boyau, lequel, étant resserré en soufflet, est d'une longueur notable, en permettant donc un cycle de travail très long, ce qui est tout à l'avantage de la productivité.

Naturellement, on peut aussi adopter d'autres formes de réalisation, par exemple équipées de lames de coupe ou couteaux de formes différentes et solidaires ou amovibles des éléments tubulaires correspondants.

## Revendications

1. Dispositif séparateur pour la mise en saucisses et la fermeture par pinces de produits distribués au détail, solides, pateux ou denses, de fragmentation variable, à interposer entre une machine doseuse du produit à mettre en saucisses, telle qu'un appareil de division en portions, et la machine de fermeture du produit mis en saucisses, telle qu'une poseuse de pinces, ledit dispositif étant **caractérisé en ce qu'**il comporte un organe sensiblement tubulaire (1) pourvu d'un conduit d'alimentation (2) du produit à mettre en saucisses (3) et **en ce qu'**au voisinage de l'extrémité dudit conduit d'alimentation (2), voisine de la machine de fermeture du produit, sont prévues plusieurs lames coupantes, de préférence deux lames coupantes (4, 5) disposées de façon radiale, de préférence diamétrale, sur ledit conduit d'alimentation (2), lesdites lames étant mutuellement indépendantes et adjacentes et au moins une d'elles étant susceptible de tourner angulairement autour de l'axe (8) longitudinal dudit conduit (2), le conduit d'alimentation (2) comprenant plusieurs éléments tubulaires coaxiaux, de préférence deux éléments tubulaires (6, 7), coaxiaux et enfilés l'un dans l'autre, dont au moins un est susceptible de tourner angulairement autour de l'axe (8) longitudinal du conduit (2), le dispositif étant **caractérisé en ce que** l'élément tubulaire intérieur (6) est susceptible de tourner autour de l'axe longitudinal (8) du conduit (2).

2. Dispositif selon la revendication 1, **caractérisé en ce que** l'élément tubulaire intérieur (6) supporte, à son extrémité voisine de la machine de fermeture du produit, la lame coupante amont (4).

3. Dispositif selon la revendication 2, **caractérisé en ce que** la lame coupante amont (4) est supportée de façon amovible sur le corps de l'élément tubulaire intérieur (6).

4. Dispositif selon la revendication 2, **caractérisé en ce que** la lame coupante amont (4) réalisée est d'un seul tenant avec l'élément tubulaire intérieur (6).

5. Dispositif selon l'une ou plusieurs des revendications 1 à 4, **caractérisé en ce que** la rotation du ou de chaque élément tubulaire, de préférence de l'élément intérieur (6), se réalise au moyen d'un système à pignon (12) et crémaillère (13), actionné par un organe de transmission, constitué, de préférence, par un cylindre pneumatique (15).

6. Dispositif selon l'une ou plusieurs des revendications 1 à 5, **caractérisé en ce que** l'élément tubulaire extérieur (7) est fixe et supporté par une plaque (9) de fixation du dispositif à la machine doseuse.

7. Dispositif selon la revendication 6, **caractérisé en ce que** l'élément tubulaire extérieur (7) supporte, à son extrémité voisine de la machine de fermeture du produit, la lame coupante aval (5).

8. Dispositif selon la revendication 7, **caractérisé en ce que** la lame coupante aval (5) est supportée de façon amovible par le corps de l'élément tubulaire extérieur (7).

9. Dispositif selon la revendication 7, **caractérisé en ce que** la lame coupante aval (5) constitue une seule pièce avec l'élément tubulaire extérieur (7).

10. Dispositif selon l'une ou plusieurs des revendications 1 à 9, **caractérisé en ce qu'**une enveloppe conteneur (10) est enfilée sur un des éléments tubulaires, de préférence sur l'élément tubulaire (7) le plus extérieur.

11. Dispositif selon la revendication 10, **caractérisé en ce que** l'enveloppe conteneur (10) est comprimée en soufflet sur l'élément tubulaire extérieur (7).

12. Dispositif selon l'une ou plusieurs des revendications précédentes, **caractérisé en ce que** la lame coupante amont (4) est munie, en position arrière, d'une saillie (17) apte à faciliter l'avancement du produit (3) à mettre en saucisses.

13. Dispositif selon la revendication 12, **caractérisé en ce que** la saillie (17) présente une extrémité arrondie.

14. Dispositif selon la revendication 12, **caractérisé en ce que** la saillie (17) présente une extrémité en forme de coin.

15. Dispositif selon l'une des revendications 12 à 14, **caractérisé en ce que** la ligne de coupe de la saillie (17) est incurvée de façon variable.

16. Dispositif selon l'une ou plusieurs des revendications 11 à 15, **caractérisé en ce qu'**il comprend des moyens permettant d'arrêter les lames coupantes (4, 5) dans une position où elles sont parfaitement alignées et superposées, pendant l'action de remplissage de l'enveloppe conteneur (10).

17. Dispositif selon l'une ou plusieurs des revendications 11 à 16, **caractérisé en ce que** la lame coupante amont (4) est capable de former, une fois terminée l'action de remplissage de l'enveloppe conteneur (10) et après avoir été mise en rotation, une surface de séparation nette (20) entre la portion de produit (18) qui va constituer le produit final mis en saucisses (23) et la portion du produit (19) qui reste à l'intérieur du conduit d'alimentation (2).

## Claims

1. A separating device for making sausages from and closing by clips solid, pasty or dense products which are distributed retail, being variable in respect of being divided up, to be interposed between a machine for quantitatively controlled feed of the product to be made into sausages such as an apparatus for dividing the product into portions, and the machine for closure of the product which has been made into sausages such as a clip-fitment machine, said device being **characterised in that** it comprises a substantially tubular member (1) provided with a feed conduit (2) for the product (3) to be made into sausages and that in the vicinity of the end of said feed conduit (2) which is close to the machine for closure of the product there are provided a plurality of cutting blades, preferably two cutting blades (4, 5), disposed radially and preferably diametrally on said feed conduit (2), said blades being mutually independent and adjacent and at least one of them being capable of turning angularly about the longitudinal axis (8) of said conduit (2), the feed conduit (2) comprising a plurality of coaxial tubular elements, preferably two tubular elements (6, 7) which are coaxial and inserted one within the other, of which at least one is capable of turning angularly about the longitudinal axis (8) of the conduit (2), the device being **characterised in that** the internal tubular element (6) is capable of turning about the longitudinal axis (8) of the conduit (2).

2. A device according to claim 1 **characterised in that** at its end close to the machine for closure of the product the internal tubular element (6) supports the upstream cutting blade (4).

3. A device according to claim 2 **characterised in that** the upstream cutting blade (4) is removably supported on the body of the internal tubular element (6).

4. A device according to claim 2 **characterised in that** the upstream cutting blade (6) is made in one piece with the internal tubular element (6).

5. A device according to one or more of claims 1 to 4 **characterised in that** rotation of the or each tubular element, preferably the internal tubular element (6), is effected by means of a rack (13) and pinion (12) system which is actuated by a transmission member preferably formed by a pneumatic cylinder (15).

6. A device according to one or more of claims 1 to 5 **characterised in that** the external tubular element (7) is fixed and supported by a plate (9) for fixing the device for the quantitatively controlled feed machine.

7. A device according to claim 6 **characterised in that** at its end close to the machine for closure of the product the external tubular element (7) supports the downstream cutting blade (5).

8. A device according to claim 7 **characterised in that** the downstream cutting blade (5) is removably supported by the body of the external tubular element (7).

9. A device according to claim 7 **characterised in that** the downstream cutting blade (5) constitutes one piece with the external tubular element (7).

10. A device according to one or more of claims 1 to 9 **characterised in that** a container casing (10) is fitted over one of the tubular elements, preferably over the most outward tubular element (7).

11. A device according to claim 10 **characterised in that** the container casing (10) is compressed in a concertina configuration on the external tubular element (7).

12. A device according to one or more of the preceding claims **characterised in that** the upstream cutting blade (4) is provided in the rearward position with a projection (17) capable of facilitating the advance movement of the product (3) to be made into sausages.

13. A device according to claim 12 **characterised in that** the projection (17) has a rounded end.

14. A device according to claim 12 **characterised in that** the projection (17) has a wedge-shaped end.

15. A device according to one of claims 12 to 14 **characterised in that** the cutting line of the projection (17) is variably curved.

16. A device according to one or more of claims 11 to 15 **characterised in that** it comprises means for arresting the cutting blades (4, 5) in a position in which they are perfectly aligned and superposed during the action of filling the container casing (10).

17. A device according to one or more of claims 11 to 16 **characterised in that** the upstream cutting blade (4) is capable of forming, once the action of filling the container casing (10) is terminated and after having been set in rotation, a clear separation surface (20) between the portion of product (18) which is going to constitute the final product (23) made into sausages and the portion of the product (19) which remains in the interior of the feed conduit (2).

## Patentansprüche

1. Portioniervorrichtung zum Füllen von Würsten mit einzeln ausgegebenen festen, pastenförmigen oder kompakten Produkten variabler Zerkleinerung, und zum Schließen mittels Klemmverschluss, zum Zwischenschalten zwischen eine Dosiervorrichtung für das zur Wurstherstellung verwendete Produkt, wie beispielsweise ein Gerät zur Aufteilung in Portionen, und eine Vorrichtung zum Verschließen des zur Wurstherstellung verwendeten Produktes, wie beispielsweise eine Klemmvorrichtung, **dadurch gekennzeichnet, dass** die Vorrichtung ein mit einer Speiseleitung (2) für das zu Wurst zu verarbeitende Produkt (3) versehenes röhrenförmiges Element (1) umfasst, und dass am Ende der Speiseleitung (2), der Schließvorrichtung des Produktes benachbart, mehrere Schneidmesser angeordnet sind, vorzugsweise zwei radial und diametral in der Speiseleitung (2) angeordnete Schneidmesser (4, 5), welche voneinander unabhängig und nebeneinander angeordnet sind, und wobei sich zumindest eines von ihnen winklig um die Längsachse (8) der Leitung (2) dreht, wobei die Speiseleitung (2) mehrere koaxiale Rohrelemente, vorzugsweise zwei koaxiale und ineinanderliegende Rohrelemente (6, 7) umfasst, von denen sich zumindest eines winklig um die Längsachse (8) der Leitung (2) dreht, wobei die Vorrichtung **dadurch gekennzeichnet ist, dass** sich das innere Rohrelement (6) um die Längsachse (8) der Leitung (2) dreht.

2. Vorrichtung nach Anspruch 1, **dadurch gekennzeichnet, dass** das innere Rohrelement (6) an seinem der Produkt-Schließvorrichtung benachbarten Ende das stromaufwärts gerichtete Schneidmesser (4) trägt.

3. Vorrichtung nach Anspruch 2, **dadurch gekennzeichnet, dass** das stromaufwärts gerichtete Schneidmesser (4) lösbar an dem Korpus des inneren Rohrelements (6) angeordnet ist.

4. Vorrichtung nach Anspruch 2, **dadurch gekennzeichnet, dass** das stromaufwärts gerichtete Schneidmesser (4) aus einem Stück mit dem inneren Rohrelement (6) gefertigt ist.

5. Vorrichtung nach einem oder mehreren der Ansprüche 1 bis 4, **dadurch gekennzeichnet, dass** die Drehung des oder jedes Rohrelements, vorzugsweise des Elements (6), mittels eines aus Ritzel (12) und einer Zahnstange (13) bestehenden Systems erfolgt, welches von einem Organ der Kraftübertragung angetrieben wird, das vorzugsweise aus einem pneumatischen Zylinder (15) besteht.

6. Vorrichtung nach einem oder mehreren der Ansprüche 1 bis 5, **dadurch gekennzeichnet, dass** das äußere Rohrelement (7) feststeht und auf einer Befestigungsplatte (9) der Dosiervorrichtung gelagert ist.

7. Vorrichtung nach Anspruch 6, **dadurch gekennzeichnet, dass** das äußere Rohrelement (7) an seinem der Produkt-Schließvorrichtung benachbarten Ende das stromabwärts gerichtete Schneidmesser (5) trägt.

8. Vorrichtung nach Anspruch 7, **dadurch gekennzeichnet, dass** das stromabwärts gerichtete Schneidmesser (5) lösbar an dem Korpus des äußeren Rohrelements (7) angeordnet ist.

9. Vorrichtung nach Anspruch 7, **dadurch gekennzeichnet, dass** das stromabwärts gerichtete Schneidmesser (5) aus einem Stück mit dem äußeren Rohrelement (7) gefertigt ist.

10. Vorrichtung nach einem oder mehreren der Ansprüche 1 bis 9, **dadurch gekennzeichnet, dass** ein Umhüllungsbehältnis (10) auf eines der Rohrelemente, vorzugsweise auf das am weitesten außen liegende Rohrelement (7), aufgesetzt ist.

11. Vorrichtung nach Anspruch 10, **dadurch gekennzeichnet, dass** das Umhüllungsbehältnis (10) auf das äußere Rohrelement (7) faltenbalgförmig aufgedrückt ist.

12. Vorrichtung nach einem oder mehreren der vorhergehenden Ansprüche, **dadurch gekennzeichnet, dass** das stromauf angeordnete Schneidmesser (4) an der hinteren Position zum Erleichtern des Vorschubs des zu Wurst zu verarbeitenden Produktes (3) mit einem Vorsprung (17) versehen ist.

13. Vorrichtung nach Anspruch 12, **dadurch gekennzeichnet, dass** der Vorsprung (17) ein abgerundetes Ende aufweist.

14. Vorrichtung nach Anspruch 12, **dadurch gekennzeichnet, dass** der Vorsprung (17) ein keilförmiges Ende aufweist.

15. Vorrichtung nach einem der Ansprüche 12 bis 14, **dadurch gekennzeichnet, dass** die Schnittlinie des Vorsprungs (17) variabel gebogen ist.

16. Vorrichtung nach einem oder mehreren der Ansprüche 11 bis 15, **dadurch gekennzeichnet, dass** sie Mittel zum Arretieren der Schneidmesser (4, 5) in einer Position umfasst, bei der sie während des Stopfvorgangs des Umhüllungsbehältnisses (10) perfekt ausgerichtet und übereinander angeordnet sind.

17. Vorrichtung nach einem oder mehreren der Ansprüche 11 bis 16, **dadurch gekennzeichnet, dass** sich das stromauf gerichtete Schneidmesser (4) drehen kann, sobald der Stopfvorgang des Umhüllungsbehältnisses (10) abgeschlossen ist, und nachdem es in Drehung versetzt worden ist, bildet es eine klare Trennfläche (20) zwischen der Portion des Produktes (18), welches das zu Würsten verarbeiterte Endprodukt (23) bildet und der Portion des Produktes (19), welches in der Speiseleitung (2) verbleibt.
